# EUROPÄISCHE PATENTSCHRIFT

(11) **EP 3 793 850 B1**
(45) Veröffentlichungstag und Bekanntmachung des Hinweises auf die Patenterteilung: **29.12.2021**
(21) Anmeldenummer: 20731002.0
(22) Anmeldetag: 28.05.2020
(51) Int. Cl.: B60K 15/05

(54) **TANKKLAPPENMODUL EINES KRAFTFAHRZEUGS**
FUEL FILLER FLAP MODULE OF A MOTOR VEHICLE
MODULE DE TRAPPE DE RÉSERVOIR DE CARBURANT DE VÉHICULE AUTOMOBILE

(30) Priorität: 08.08.2019 DE 102019121457
(43) Veröffentlichungstag der Anmeldung: 24.03.2021
(73) Patentinhaber: HUF Hülsbeck & Fürst GmbH & Co. KG, 42551 Velbert (DE)
(72) Erfinder: WIETKAMP, Stephan, 48161 Münster (DE); KOCH, Andreas, 42579 Heiligenhaus (DE)
(74) Vertreter: Zenz Patentanwälte Partnerschaft mbB
(86) Internationale Anmeldenummer: PCT/EP2020/064795
(87) Internationale Veröffentlichungsnummer: WO 2021/023408

(56) Entgegenhaltungen:
- EP-A2- 1 281 558
- DE-A1-102017 009 616
- GB-A- 2 528 773
- US-A1- 2017 182 882
- US-B2- 7 758 098

## Beschreibung

Die Erfindung richtet sich auf ein Tankklappenmodul eines Kraftfahrzeugs, aufweisend einen Träger, eine an dem Träger schwenkbar gelagerte Tankklappe, die zwischen einer Schließstellung und einer Offenstellung bewegbar ausgebildet ist, und einen zum Bewegen der Tanklappe aus der Schließstellung in die Offenstellung und zurück in die Schließstellung ausgebildeten Bewegungsmechanismus, wobei der Bewegungsmechanismus ein mechanisches Ausstellelement aufweist, welches an dem Träger angeordnet ist und welches eine in die Offenstellung wirkende Ausstellkraft auf die Tankklappe ausübend ausgebildet ist.

Ein Tankklappenmodul der vorstehend genannten Art ist zum Beispiel aus der US 2017/182882 A1 bekannt.

Ein solches Tankklappenmodul ist zum Beispiel aus der DE 10 2017 009 616 A1 bekannt und weist eine Tankmulde und eine Tankklappe mit einem an der Tankmulde angelenkten Scharnierarm auf, wobei die Tankklappe durch den Scharnierarm in einer Schwenkbewegung aus einer Schließstellung, in der die Tankmulde zumindest zum Teil verschlossen ist, in eine Offenstellung verschwenkt werden kann, in welcher die Tankmulde für ein Betanken des Kraftfahrzeugs von außen zugänglich ist. Sollte jedoch beispielsweise die Tankklappe aufgrund von Eisbildung in ihrer Einfahrstellung festgehalten werden, so reicht die Kraft eines zum Aufschwenken der Tankklappe vorgesehenen, motorisch angetriebenen Bewegungsmechanismus zum Ausstellen der Tankklappe üblicherweise nicht aus, um die Tankklappe loszubrechen und in ihre Offenstellung zu bewegen, so dass zunächst nach einer Möglichkeit der Enteisung gesucht werden muss, um die Tankklappe bewegbar zu bekommen.

Der Erfindung liegt die Aufgabe zugrunde eine Lösung zu schaffen, die auf konstruktiv einfache Weise ein Tankklappenmodul eines Kraftfahrzeugs bereitstellt, durch welches eine Blockierung der Bewegung der Tankklappe oder ein Widerstand für die Bewegung der Tankklappe zu Beginn ihres Ausstellvorgangs überwunden werden kann.

Bei einem Tankklappenmodul der eingangs bezeichneten Art wird die Aufgabe erfindungsgemäß dadurch gelöst, dass der Bewegungsmechanismus ein motorisch angetriebenes Ausstellmittel aufweist, welches die Tankklappe mit einer Hilfskraft aus der Schließstellung heraus bis zu einer Anfangsausstellposition, die zwischen der Schließstellung und der Offenstellung liegt, drängend ausgebildet ist, wobei die Hilfskraft größer als die Ausstellkraft ist.

Vorteilhafte und zweckmäßige Ausgestaltungen und Weiterbildungen der Erfindung ergeben sich aus den Unteransprüchen.

Es sei angemerkt, dass unter dem Begriff "Tanken" im Sinne der Erfindung ein Auftanken eines Kraftfahrzeugs mit traditionellem Kraftstoff oder Wasserstoff sowie ein Aufladen einer Batterie eines Kraftfahrzeugs, also eines sogenannten Elektrofahrzeugs, zu verstehen ist, wobei die Tankklappe des erfindungsgemäßen Tankklappenmoduls entweder einen mit einem Kraftstofftank in Verbindung stehenden und von einem Tankdeckel verschlossenen Tankstutzen oder eine Ladebuchse für einen Ladestecker abdeckt.

Durch die Erfindung wird ein Tankklappenmodul eines Kraftfahrzeugs zur Verfügung gestellt, welches sich durch eine einfache Konstruktion und durch ein besonderes Konzept hinsichtlich des Überwindens einer Blockierung oder eines Widerstandes bei der Bewegung der Tankklappe zu Beginn des Ausstellvorgangs auszeichnet. Erfindungsgemäß sorgt das mechanische Ausstellelement dafür, dass in einem Normalbetrieb ohne Blockade die Tankklappe aus der Schließstellung in die Offenstellung gedrängt wird, so dass ein Benutzer eine Möglichkeit des Zugangs zu einem Tankstutzen oder einer Ladebuchse erlangt. Im Fall einer Blockierung der Ausstellbewegung der Tankklappe, wie es beispielsweise bei Eisbildung durch ein Festfrieren der Tankklappe in ihrer Schließstellung der Fall sein kann, ist erfindungsgemäß durch das motorisch angetriebene Ausstellmittel sichergestellt, dass die anfängliche Bewegung zur Ausstellung der Tankklappe auch bei Blockierung durch beispielsweise Festfrieren sichergestellt ist, denn die von dem motorisch angetriebenen Ausstellmittel aufgebrachte Hilfskraft ist größer als die Ausstellkraft des mechanischen Ausstellelements und reicht aus, um die Blockierung zu lösen. Im Normalbetrieb wirkt die Hilfskraft des motorisch angetriebenen Ausstellmittels nicht, denn die Tankklappe "flieht" aus der Schließstellung in Richtung der Offenstellung vor dem motorisch angetriebenen Ausstellmittel durch die Ausstellkraft des mechanischen Ausstellelements, so dass das motorisch angetriebene Ausstellmittel gar nicht erst gegen die Tankklappe drängen kann, um diese aus der Schließstellung herauszubewegen.

Die Erfindung sieht in Ausgestaltung vor, dass die Tankklappe um eine an dem Träger gelagerte Schwenkachse schwenkbar gelagert ist, wobei die Anfangsausstellposition eine aus der Schließstellung heraus in Richtung der Offenstellung bewegte Position ist, in welcher die Tankklappe mit Bezug auf die Schließstellung um 2° bis 10° um die Schwenkachse in Richtung der Offenstellung verschwenkt angeordnet ist. Das mechanisch angetriebene Ausstellmittel wirkt vorzugsweise nur bis zu einem Schwenkwinkel von 4° auf die Tankklappe, um diese aus der Schließstellung herauszubewegen, was ein vollkommen ausreichender Schwenkwinkel ist, um die Gängigkeit und Bewegbarkeit der Tankklappe zu gewährleisten.

Konstruktiv besonders günstig ist es in Ausgestaltung der Erfindung, wenn das mechanische Ausstellelement eine um die Schwenkachse gewundene Drehfeder ist, von welcher sich ein erster Federarm an der Tankklappe abstützt und von welcher sich ein zweiter Federarm an dem Träger abstützt. Die Verwendung einer Drehfeder als mechanisches Ausstellelement stellt nicht nur eine im Hinblick auf die Kosten günstige Möglichkeit dar. Vielmehr wird dadurch auch die Wartungsintensität des Tankklappenmoduls deutlich verringert.

Im Hinblick auf einen geringen Bauraum sieht die Erfindung in weiterer Ausgestaltung vor, dass das motorisch angetriebene Ausstellmittel eine von einem an dem Träger angebrachten Aktuator angetriebene Abtriebsachse aufweist, welche beabstandet zu der Schwenkachse an dem Träger gelagert ist und an welcher eine Exzenterkontur angeformt ist, die von der Schließstellung bis zu der Anfangsausstellposition mit der Tankklappe zusammenwirkt, wenn die Ausstellkraft des mechanischen Ausstellelements die Tankklappe nicht aus der Schließstellung heraus bis in die Anfangsausstellposition drängt.

Die Erfindung sieht in Ausgestaltung vor, dass die Exzenterkontur mit einem mit Bezug auf die Abtriebsachse ansteigenden Radius ausgebildet ist, welcher bei Drehung der Abtriebsachse in Anlage an einen Schwenkarm der Tankklappe gelangend und gegen den Schwenkarm drängend sowie dabei die Tankklappe in die Anfangsausstellposition drängend ausgebildet ist. Dabei drängt in einem Blockade-Betrieb des Tankklappenmoduls die Exzenterkontur den Schwenkarm maximal bis in die Anfangsausstellposition, sollte sich die Tankklappe nicht schon vorher von einer Blockade gelöst haben und vor dem motorisch betriebenen Ausstellmittel "fliehen".

Zur Sicherstellung der Entkopplung des motorisch angetriebenen Ausstellmittels von der Tankklappe sieht die Erfindung in weiterer Ausgestaltung vor, dass ab der Anfangsausstellposition bis zu der Offenstellung die Exzenterkontur von dem Schwenkarm der Tankklappe beabstandet angeordnet ist.

In einer noch weiteren Ausgestaltung der Erfindung ist vorgesehen, dass an der Abtriebsachse ein Scheibenelement angeformt ist und ein Seilmittel vorgesehen ist, welches mit einem ersten Ende an dem Scheibenelement fixiert ist und von dem ein zweites Ende an der Tankklappe befestigt ist. Somit sorgt die Bewegung der Abtriebsachse dafür, dass das an dem Scheibenelement aufgewickelte Seilmittel ein zeitlich kontrolliertes Ausstellen der Tankklappe gewährleistet, indem das Seilmittel die Tankklappe gegen die Ausstellkraft des mechanischen Ausstellelements in die Offenstellung und aus der Offenstellung auch wieder in die Schließstellung kontrolliert bewegt. Dementsprechend ist in Ausgestaltung der Erfindung vorgesehen, dass das Seilmittel mit der Tankklappe derart verbunden ist, dass das Seilmittel bei einer Bewegung der Tankklappe aus der Anfangsausstellposition in die Offenstellung die Bewegung der Tankklappe gegen die Ausstellkraft des mechanischen Ausstellelements führend ausgebildet ist.

Zu diesem Zweck ist in vorteilhafter Ausgestaltung der Erfindung vorgesehen, dass das Scheibenelement eine zum Aufrollen und Abrollen des Seilmittels ausgebildete Wickelkontur aufweist.

Schließlich sieht die Erfindung in Ausgestaltung vor, dass die Wickelkontur mit wenigstens zwei unterschiedlichen, stetig ineinander übergehenden Radien oder exzentrisch ausgebildet ist. Diese unsymmetrische Gestalt der Wickelkontur erlaubt durch unterschiedliche Radien, dass beispielsweise das Seilmittel bei der Bewegung der Tankklappe in die Schließstellung auf dem letzten Bewegungsweg mit einer höheren Kraft zugezogen wird, um die Tankklappe dichtend in eine vorhandene Dichtung zu ziehen.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine schematische Seitenansicht eines Kraftfahrzeugs mit einem erfindungsgemäßen Tankklappenmodul,
Figur 2 eine perspektivische Ansicht des erfindungsgemäßen Tankklappenmoduls mit einer Tankklappe, die in einer Schließstellung angeordnet ist,
Figur 3 eine perspektivische Ansicht des erfindungsgemäßen Tankklappenmoduls mit der Tankklappe, die in einer Offenstellung angeordnet ist,
Figur 4 eine perspektivische Einzelteildarstellung des erfindungsgemäßen Tankklappenmoduls,
Figur 5 eine Perspektivansicht auf die Tankklappe und einen Bewegungsmechanismus des erfindungsgemäßen Tankklappenmoduls,
Figur 6 eine weitere Perspektivansicht auf einzelne Bauteile des erfindungsgemäßen Tankklappenmoduls,
Figur 7 eine perspektivische Detailansicht auf einzelne Bauteile des erfindungsgemäßen Tankklappenmoduls,
Figur 8 eine Perspektivansicht auf ein Scheibenelement des Bewegungsmechanismus des erfindungsgemäßen Tankklappenmoduls,
Figur 9 eine Seitenansicht auf das Scheibenelement des Bewegungsmechanismus des erfindungsgemäßen Tankklappenmoduls,
Figur 10 eine Draufsicht auf das Scheibenelement des Bewegungsmechanismus des erfindungsgemäßen Tankklappenmoduls,
Figur 11 eine Draufsicht auf die Tankklappe und den Bewegungsmechanismus des erfindungsgemäßen Tankklappenmoduls, wobei die Tankklappe in ihrer Schließstellung angeordnet ist,
Figur 12 eine Detailansicht auf den Bewegungsmechanismus des erfindungsgemäßen Tankklappenmoduls, wobei die Tankklappe in ihrer Schließstellung angeordnet ist,
Figur 13 eine weitere Detailansicht auf den Bewegungsmechanismus des erfindungsgemäßen Tankklappenmoduls, wobei die Tankklappe in ihrer Schließstellung angeordnet ist und ein motorisch angetriebenes Ausstellmittel in Betrieb gesetzt ist,
Figur 14 eine weitere Detailansicht auf den Bewegungsmechanismus des erfindungsgemäßen Tankklappenmoduls, wobei die Tankklappe aus ihrer Schließstellung herausbewegt angeordnet ist und mit Bezug auf die Schließstellung um 2° um eine Schwenkachse verschwenkt angeordnet ist,
Figur 15 eine weitere Detailansicht auf den Bewegungsmechanismus des erfindungsgemäßen Tankklappenmoduls, wobei die Tankklappe aus ihrer Schließstellung herausbewegt ist und in einer Anfangsausstellposition, in welcher die Tankklappe mit Bezug auf die Schließstellung um 4° um die Schwenkachse verschwenkt angeordnet ist,
Figur 16 eine weitere Detailansicht auf den Bewegungsmechanismus des erfindungsgemäßen Tankklappenmoduls, wobei die Tankklappe in ihrer Offenstellung angeordnet ist und mit Bezug auf die Schließstellung um 90° um die Schwenkachse verschwenkt angeordnet ist, und
Figur 17 eine Draufsicht auf die Tankklappe und den Bewegungsmechanismus des erfindungsgemäßen Tankklappenmoduls, wobei die Tankklappe in dieser Ansicht sowohl in ihrer Schließstellung als auch in ihrer Offenstellung angeordnet dargestellt ist.

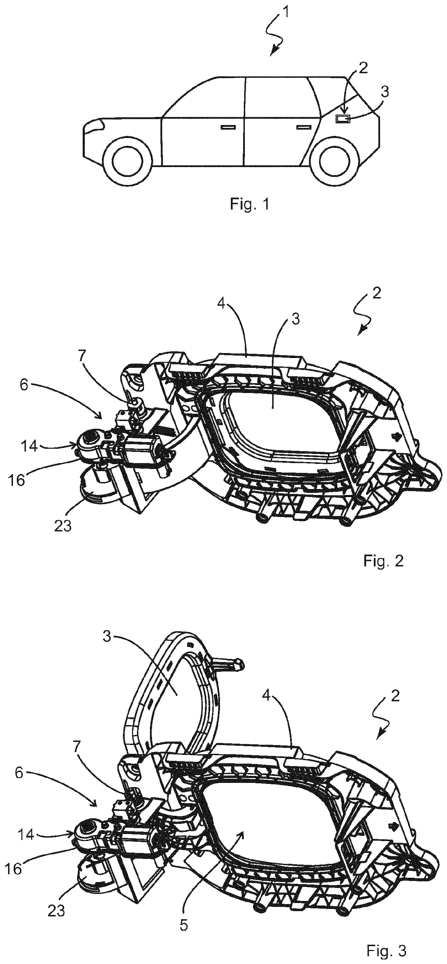

In Figur 1 ist ein Kraftfahrzeug 1 in Form eines PKWs exemplarisch dargestellt, welches in dem Beispiel über ein Tankklappenmodul 2 verfügt, welches eine Tankklappe 3 aufweist. Die Tankklappe 3 verschließt eine in den Figuren nicht näher dargestellte Mulde, in welcher entweder ein mit einem Kraftstofftank in Verbindung stehender und von einem Tankdeckel verschlossener Tankstutzen oder eine Ladebuchse für einen Ladestecker angeordnet sind. Das erfindungsgemäße Tankklappenmodul 2 weist ferner einen Träger 4 auf, welcher an einem Karosseriebauteil des Kraftfahrzeugs 1 befestigbar ist. An dem beispielsweise aus den Figuren 2 und 3 ersichtlichen Träger 4 ist die Tankklappe 3 schwenkbar gelagert, so dass die Tankklappe 3 zwischen einer in Figur 2 gezeigten Schließstellung, in welcher die Tankklappe 3 die Mulde abdeckt und ggf. verschließt, und einer in Figur 3 gezeigten Offenstellung, in welcher ein Benutzer Zugriff durch eine in dem Träger 4 ausgebildete Durchgangsöffnung 5 auf das Innere der Mulde hat, bewegbar ausgebildet ist. Folglich verschließt die Tankklappe 3 in ihrer Schließstellung die in dem Träger 4 ausgebildete Durchgangsöffnung 5, wohingegen die Tankklappe 3 in ihrer Offenstellung von der Durchgangsöffnung 5 abgehoben angeordnet ist und einen Durchlass durch die Durchgangsöffnung 5 hindurch freigibt. Ferner weist das erfindungsgemäße Tankklappenmodul 2 einen Bewegungsmechanismus 6 (siehe zum Beispiel Figuren 2 und 3) auf, welcher zum Bewegen der Tanklappe 3 aus der Schließstellung in die Offenstellung und zurück in die Schließstellung ausgebildet ist. Bei der Bewegung der Tankklappe 2 aus der Schließstellung in die Offenstellung durchläuft die Tankklappe 2 eine zwischen der Schließstellung und der Offenstellung liegende Anfangsausstellposition.

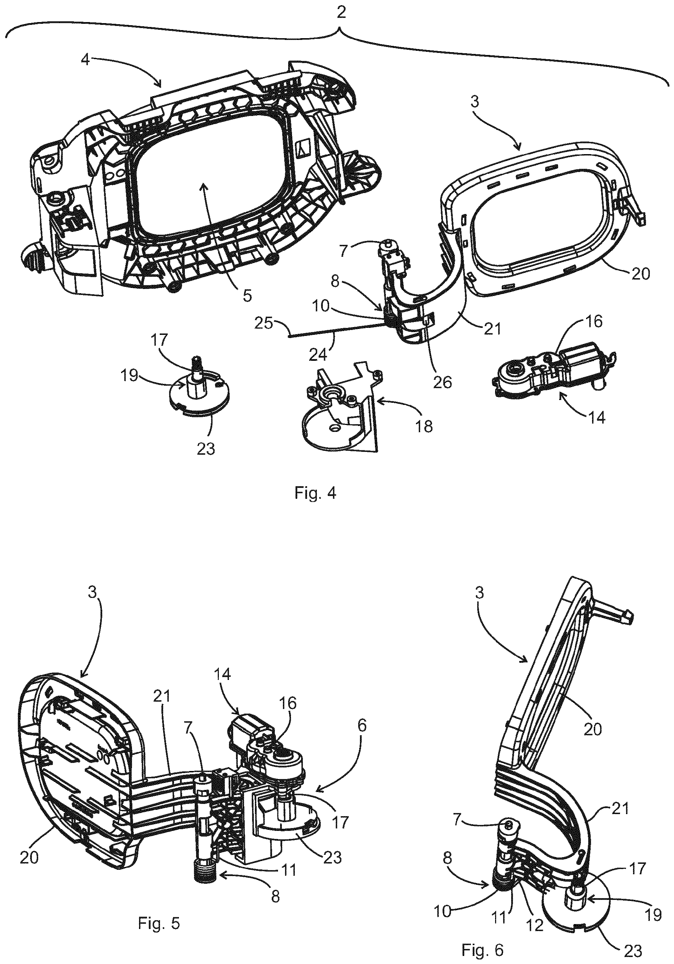

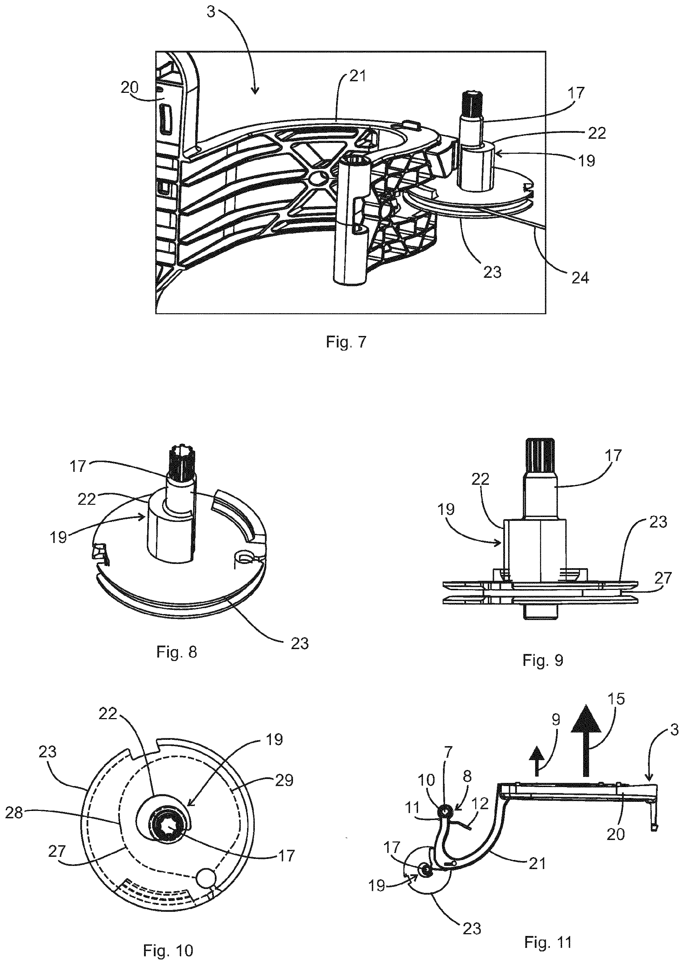

Aus der Zusammenschau der Figuren 2 bis 11 ist zu erkennen, dass die Tankklappe 3 schwenkbar um eine Schwenkachse 7 gelagert ist, wobei die Schwenkachse 7 selbst an dem Träger 4 gelagert ist. Um die Tankklappe 3 in einem Normalbetrieb aus der Schließstellung in die Offenstellung zu bewegen, weist der Bewegungsmechanismus 6 ein mechanisches Ausstellelement 8 auf, welches beispielsweise aus Figur 5 ersichtlich ist. Das mechanische Ausstellelement 8 ist an dem Träger 4 angeordnet, wobei das mechanische Ausstellelement 8 ferner eine in die Offenstellung wirkende Ausstellkraft 9 (siehe zum Beispiel Figur 11) auf die Tankklappe 3 ausübend ausgebildet ist. Zu diesem Zweck ist das mechanische Ausstellelement 8 als eine Drehfeder 10 ausgebildet, die um die Schwenkachse 7 gewunden ist. Ein erster Federarm 11 der Drehfeder 10 stützt sich an der Tankklappe 3 ab, wohingegen sich ein zweiter Federarm 12 der Drehfeder 10 an dem Träger 4 abstützt. In der Schließstellung der Tankklappe 4 ist die Drehfeder 10 folglich gespannt und übt die Ausstellkraft 9 aus, welche auf die Tankklappe 3 wirkt und diese in Richtung ihrer Offenstellung drängt. Der Bewegungsmechanismus 6 weist ferner ein motorisch angetriebenes Ausstellmittel 14 auf, welches beispielsweise in den Figuren 2 bis 5 dargestellt ist. Das motorisch angetriebene Ausstellmittel 14 ist derart ausgebildet, die Tankklappe 3 mit einer Hilfskraft 15 (siehe zum Beispiel Figur 11) aus der Schließstellung heraus bis zu der Anfangsausstellposition, die zwischen der Schließstellung und der Offenstellung liegt, zu drängen, wenn ein Blockadezustand vorliegt, bei welchem die Ausstellkraft 9 des mechanischen Ausstellelements 8 nicht ausreicht, um die Tankklappe 3 aus der Schließstellung herauszubewegen. Dabei ist die Hilfskraft 15 des motorisch angetriebenen Ausstellmittels 14 größer als die Ausstellkraft 9 des mechanischen Ausstellelements 8. Bei dem motorisch angetriebenen Ausstellmittel 14 handelt es sich um einen Aktuator 16, welcher mit einer Abtriebsachse 17 antriebsverbunden ist und welcher die Abtriebsachse 17 drehend antreibt, wobei der Aktuator 16 an dem Träger 4 befestigt ist. Die Abtriebsachse 17 ist zu der Schwenkachse 7 beabstandet an dem Träger 4 gelagert. In dem in den Figuren dargestellten Ausführungsbeispiel ist zu diesem Zweck eine Halterung 18 vorgesehen, mit welcher der Bewegungsmechanismus 6 als Baugruppe an dem Träger 4 fixiert ist.

Damit das motorisch angetriebene Ausstellmittel 14 die Tankklappe 3 aus der Schließstellung herausdrängen kann, ist an der Abtriebsachse 17 eine Exzenterkontur 19 angeformt. Diese Exzenterkontur 19 wirkt mit der Tankklappe 3 zusammen, wobei sich dieses Zusammenwirken auf den Bereich von der Schließstellung bis zu der Anfangsausstellposition bezieht und wobei das Zusammenwirken nur dann vorliegt, wenn die Ausstellkraft 9 des mechanischen Ausstellelements 8 die Tankklappe 3 nicht aus der Schließstellung heraus über die Anfangsausstellposition hinaus drängt, was bei einem Blockade-Betrieb der Fall ist. Die Tankklappe 3 umfasst einen Klappenkörper 20, welcher an die Durchgangsöffnung 5 angepasst ist und die Durchgangsöffnung 5 überdecken bzw. verschließen kann, und einen U-förmig ausgebildeten Schwenkarm 21, dessen freies Ende über die Schwenkachse 7 gesteckt und dadurch drehbar gelagert ist.

In einem Blockade-Betrieb drängt das motorisch angetriebene Ausstellmittel 14 mit der Abtriebsachse 17 gegen den Schwenkarm 21, wobei zu diesem Zweck an der Abtriebsachse 17 die Exzenterkontur 19 angeformt ist, die von der Schließstellung bis zu der Anfangsausstellposition mit der Tankklappe 3 zusammenwirkt, wenn die Ausstellkraft 9 des mechanischen Ausstellelements 8 die Tankklappe 3 nicht aus der Schließstellung heraus bis zu der Anfangsausstellposition drängt. Die Anfangsausstellposition ist eine aus der Schließstellung heraus in Richtung der Offenstellung bewegte Position, in welcher die Tankklappe 3 mit Bezug auf die Schließstellung um die Schwenkachse 7 in Richtung der Offenstellung verschwenkt angeordnet ist. Der Winkel der Verschwenkung kann dabei in einem Bereich zwischen 2° bis 10° liegen. Wie beispielsweise aus den Figuren 8, 10 und 11 ersichtlich ist, ist die Exzenterkontur 19 mit einem mit Bezug auf die Abtriebsachse 17 ansteigenden Radius 22 ausgebildet ist, welcher bei Drehung der Abtriebsachse 17 in Anlage an den Schwenkarm 21 der Tankklappe 3 gelangend und gegen den Schwenkarm 21 drängend sowie dabei die Tankklappe 3 in die Anfangsausstellposition drängend ausgebildet ist. Es sei nochmals darauf hingewiesen, dass die Exzenterkontur 19 nur dazu dient, in einem Blockade-Betrieb die Tankklappe 3 mit Hilfe der Hilfskraft bis zu der Anfangsausstellposition zu bewegen, aus welcher das mechanische Ausstellelement 8 dann die Tankklappe 3 mit Hilfe der Ausstellkraft 9 bis in die Offenstellung drängt und die Exzenterkontur 19 keine Wirkung mehr auf die Tankklappe 3 ausübt.

Damit die Tankklappe 3 nach dem Überwinden einer Blockade aus der Anfangsausstellposition nicht unkontrolliert und mit zu hoher Geschwindigkeit bzw. zu großer Beschleunigung bis in die Offenstellung katapultiert wird, ist an der Abtriebsachse 17 ein Scheibenelement 23 angeformt. Das Scheibenelement 23 ist mit Bezug auf die Abtriebsachse 17 axial versetzt zu der Exzenterkontur 19 angeordnet. Das Scheibenelement 23 dient zur Aufnahme eines Seilmittels 24, welches mit einem ersten Ende 25 an dem Scheibenelement 23 fixiert ist und von dem ein zweites Ende 26 an der Tankklappe 3 befestigt ist. In der Schließstellung der Tankklappe 3 ist das Seilmittel 24 auf dem Scheibenelement 23 aufgewickelt, wozu das Scheibenelement 23 eine Wickelkontur 27 aufweist, wie durch die gestrichelte Linie in Figur 10 dargestellt ist. In Figur 7 ist das Seilmittel 24 noch nicht auf der Wickelkontur 27 des Scheibenelements 23 aufgerollt und auch noch nicht an dem Scheibenelement 23 befestigt. Daher ragt das Seilmittel 24 seitlich aus einem Schlitz des Scheibenelements 23 hervor, wobei die zum Aufrollen und Abrollen des Seilmittels 24 ausgebildete Wickelkontur 27 des Scheibenelements 23 von außen nicht sichtbar ist und nur über den Schlitz für das Seilmittel 24 erreichbar ist. Das Seilmittel 24 ist mit der Tankklappe 3 derart verbunden, dass das Seilmittel 24 bei einer Bewegung der Tankklappe 3 aus der Anfangsausstellposition in die Offenstellung die Bewegung der Tankklappe 3 gegen die Ausstellkraft 9 des mechanischen Ausstellelements 8 führend ausgebildet ist. Es ist ersichtlich, dass die Bewegung der Tankklappe 3 daher durch das motorisch angetriebene Ausstellmittel 14 über das Scheibenelement 23 und damit das Seilmittel 24 kontrolliert erfolgt. Die Wickelkontur 27 ist mit wenigstens zwei unterschiedlichen, stetig ineinander übergehenden Radien 28, 29 oder exzentrisch ausgebildet, wie die Figur 10 zeigt. Das Seilmittel 24 wickelt dann über den kleinen Radius 28 ab, wenn die Tankklappe 3 mit einer hohen Kraft bewegt werden soll, was beispielsweise bei einer Bewegung der Tankklappe 3 zurück in die Schließstellung der Fall ist, wenn der Umfangsrand der Tankklappe 3 in eine Dichtung reingezogen werden soll. Hingegen wickelt das Seilmittel 24 über den großen Radius 29 ab, wenn keine große Kraft erforderlich ist und die Tankklappe 3 allein durch die Ausstellkraft des mechanischen Ausstellelements 8 in die Offenstellung gedrängt wird.

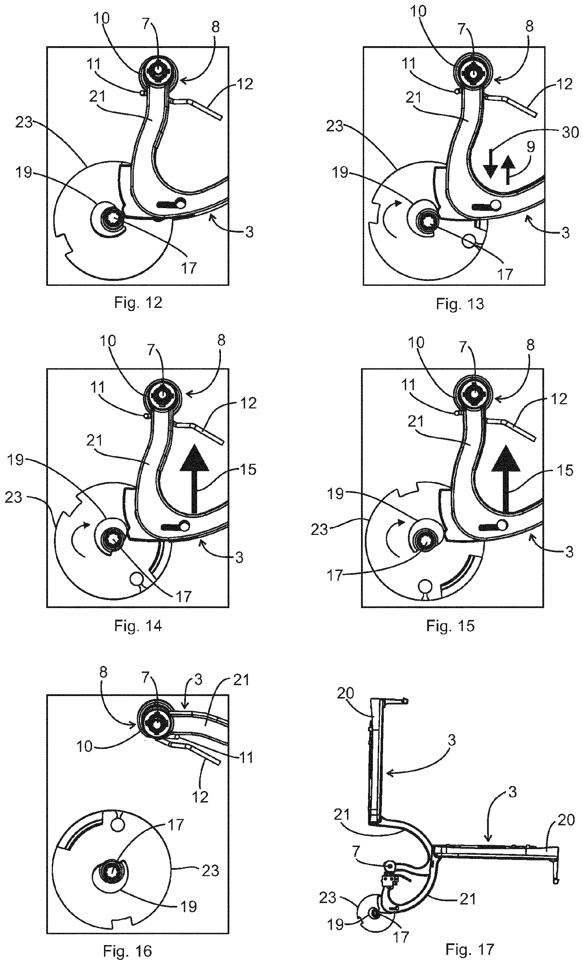

Mit Bezug auf die Figuren 12 bis 17 wird nachstehend ein Blockade-Betrieb des erfindungsgemäßen Tankklappenmoduls 2 beschrieben, wobei die Figuren 12 bis 16 Detailansichten auf einen Teil des Bewegungsmechanismus 6 des erfindungsgemäßen Tankklappenmoduls 3 zeigen.

In der Figur 12 ist die Tankklappe 3 in ihrer Schließstellung angeordnet, wobei die in Richtung der Offenstellung wirkende Ausstellkraft 9 des mechanischen Ausstellelements 8 auf die Tankklappe 3 wirkt. Das motorisch angetriebene Ausstellmittel 14 weist ein in den Figuren nicht gezeigtes Zahnradgetriebe auf, welches selbstsperrend wirkt, so dass bei außer Betrieb gesetztem, motorisch angetriebenem Ausstellmittel 14 die Tankklappe 3 über das Seilmittel 24 und das Scheibenelement 23 in ihrer Schließstellung gehalten ist, weil sich die Abtriebsachse 17 aufgrund der selbstsperrenden Wirkung des Zahnradgetriebes des motorisch angetriebenen Ausstellmittels 14 nicht drehen kann. In der Schließstellung der Tankklappe 3 ist die Exzenterkontur 19 von dem Schwenkarm 21 beabstandet angeordnet.

Die Figur 13 zeigt eine Stellung, in welcher die Tankklappe 3 aufgrund einer Blockade, die mit einer Blockade-Kraft 30 der Ausstellkraft 9 entgegenwirkt, nach wie vor in ihrer Schließstellung angeordnet ist. Dabei ist die Blockade-Kraft 30 ersichtlich mindestens so groß wie die Ausstellkraft 9. Das Tankklappenmodul 2 hat ein Signal zum Öffnen der Tankklappe 3 erhalten und das motorisch angetriebene Ausstellmittel 14 ist in Betrieb gesetzt und hat die Abtriebsachse 17 im Uhrzeigersinn (siehe Pfeil in Figur 13) gedreht, so dass das in Figur 13 nicht gezeigte Seilmittel 24 entspannt ist und im Normal-Betrieb die Tankklappe 3 freigeben würde, so dass die Ausstellkraft 9 die Tankklappe 3 in Richtung der Offenstellung drängen würde. Die Ausstellkraft 9 des mechanischen Ausstellelements 8 reicht aber aufgrund der wirksamen Blockade-Kraft 30 nicht aus, um die Blockade zu lösen und die Blockade-Kraft 30 zu überwinden. Vielmehr gelangt in Figur 13 die Exzenterkontur 19 der Abtriebsachse 17 mit ihrem kleinsten Radius in Anlage an den Schwenkarm 21 der Tankklappe 3, so dass das motorisch angetriebene Ausstellmittel 14 mit der Tankklappe 3 bewegungsgekoppelt ist, wenn die Exzenterkontur 19 an dem Schwenkarm 21 der Tankklappe 3 anliegt.

In Figur 14 ist die Abtriebsachse 17 nun im Vergleich zu der in Figur 13 gezeigten Stellung um 2° im Uhrzeigersinn (siehe Pfeil in Figur 14) gedreht, wobei der ansteigende Radius 22 der Exzenterkontur 19 den Schwenkarm 21 mit der Hilfskraft 15 in die Offenstellung drängt. Die Hilfskraft 15, welcher größer als die Blockade-Kraft 30 ist, soll die Blockade lösen.

In Figur 15 ist die Abtriebsachse 17 von dem motorisch angetriebenen Ausstellmittel 14 um weitere 2° und damit um insgesamt 4° im Vergleich zu der in Figur 13 gezeigten Stellung im Uhrzeigersinn (siehe Pfeil in Figur 15) gedreht, wobei durch den ansteigenden Radius 22 der Exzenterkontur 19 die auf den Schwenkarm 21 wirkende Hilfskraft 15 erhöht wird und die Tankklappe 3 aus der Durchgangsöffnung 5 herausbewegt ist, so dass die Blockade aufgehoben und die Blockade-Kraft 30 überwunden ist. Dadurch ist es nun dem mechanischen Ausstellelement 8 möglich, die in ihrer Anfangsausstellposition angeordnete Tankklappe 3 in die Offenstellung zu drängen.

Die Figur 16 zeigt die Tankklappe 3, die nun in ihrer Offenstellung angeordnet ist, wobei das Ausstellen der Tankklappe 3 aus der Anfangsausstellposition bis in die Offenstellung durch die Ausstellkraft 9 des mechanischen Ausstellelement 8 erfolgt. Der Ausstellkraft 9 wirkt dabei das Seilmittel 24 entgegen, welches über die Wickelkontur 27 abgerollt wird, da die Abtriebsachse 17 bis zur Erreichung der Offenstellung von dem motorisch angetriebenen Ausstellmittel 14 gedreht wird. Dabei ist es für die Erfindung charakteristisch, dass ab der Anfangsausstellposition bis zu der Offenstellung die Exzenterkontur 19 von dem Schwenkarm 21 der Tankklappe 3 beabstandet angeordnet ist, wie es aus Figur 16 ersichtlich ist. In Figur 17 sind nochmals die beiden Extremstellungen der Tankklappe 3 gezeigt, die aus der Schließstellung um 90° um die Schwenkachse 7 verschwenkt in die Offenstellung bewegbar ausgebildet ist, wobei alternativ auch ein Verschwenken der Tankklappe 3 um 110° denkbar ist.

Zusammenfassend ist vorstehend das erfindungsgemäße Tankklappenmodul 2 eines Kraftfahrzeugs 1 beschrieben worden, welches den Träger 4, die an dem Träger 4 schwenkbar gelagerte Tankklappe 3, die zwischen der Schließstellung und der Offenstellung bewegbar ausgebildet ist, und den zum Bewegen der Tanklappe 3 aus der Schließstellung in die Offenstellung und zurück in die Schließstellung ausgebildeten Bewegungsmechanismus 6 aufweist. Gemäß der Erfindung weist der Bewegungsmechanismus 6 das mechanische Ausstellelement 8 auf, welches an dem Träger 4 angeordnet ist und welches die in die Offenstellung wirkende Ausstellkraft 9 auf die Tankklappe 3 ausübend ausgebildet ist, wobei der Bewegungsmechanismus 6 ferner das motorisch angetriebene Ausstellmittel 14 aufweist, welches die Tankklappe 3 mit der Hilfskraft 15 aus der Schließstellung heraus bis zu der Anfangsausstellposition, die zwischen der Schließstellung und der Offenstellung liegt, drängend ausgebildet ist, wobei die Hilfskraft 15 größer als die Ausstellkraft 9 ist.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der von den Ansprüchen definierte Bereich der Erfindung verlassen wird.

## Patentansprüche

1. Tankklappenmodul (2) eines Kraftfahrzeugs (1), aufweisend einen Träger (4), eine an dem Träger (4) schwenkbar gelagerte Tankklappe (3), die zwischen einer Schließstellung und einer Offenstellung bewegbar ausgebildet ist, und einen zum Bewegen der Tanklappe (3) aus der Schließstellung in die Offenstellung und zurück in die Schließstellung ausgebildeten Bewegungsmechanismus (6),
wobei der Bewegungsmechanismus (6) ein mechanisches Ausstellelement (8) aufweist, welches an dem Träger (4) angeordnet ist und welches eine in die Offenstellung wirkende Ausstellkraft (9) auf die Tankklappe (3) ausübend ausgebildet ist, wobei
**dadurch gekennzeichnet, dass**
der Bewegungsmechanismus (6) ein motorisch angetriebenes Ausstellmittel (14) aufweist, welches die Tankklappe (3) mit einer Hilfskraft (15) aus der Schließstellung heraus bis zu einer Anfangsausstellposition, die zwischen der Schließstellung und der Offenstellung liegt, drängend ausgebildet ist, wobei die Hilfskraft (15) größer als die Ausstellkraft (9) ist.

2. Tankklappenmodul (2) nach Anspruch 1, **dadurch gekennzeichnet, dass** die Tankklappe (3) um eine an dem Träger (4) gelagerte Schwenkachse (7) schwenkbar gelagert ist, wobei die Anfangsausstellposition eine aus der Schließstellung heraus in Richtung der Offenstellung bewegte Position ist, in welcher die Tankklappe (3) mit Bezug auf die Schließstellung um 2° bis 10° um die Schwenkachse (7) in Richtung der Offenstellung verschwenkt angeordnet ist.

3. Tankklappenmodul (2) nach Anspruch 2, **dadurch gekennzeichnet, dass** das mechanische Ausstellelement (8) eine um die Schwenkachse (7) gewundene Drehfeder (10) ist, von welcher sich ein erster Federarm (11) an der Tankklappe (3) abstützt und von welcher sich ein zweiter Federarm (12) an dem Träger (4) abstützt.

4. Tankklappenmodul (2) nach Anspruch 2, **dadurch gekennzeichnet, dass** das motorisch angetriebene Ausstellmittel (14) eine von einem an dem Träger (4) angebrachten Aktuator (16) angetriebene Abtriebsachse (17) aufweist, welche beabstandet zu der Schwenkachse (7) an dem Träger (4) gelagert ist und an welcher eine Exzenterkontur (19) angeformt ist, die von der Schließstellung bis zu der Anfangsausstellposition mit der Tankklappe (3) zusammenwirkt, wenn die Ausstellkraft (9) des mechanischen Ausstellelements (8) die Tankklappe (3) nicht aus der Schließstellung heraus bis in die Anfangsausstellposition drängt.

5. Tankklappenmodul (2) nach Anspruch 4, **dadurch gekennzeichnet, dass** die Exzenterkontur (19) mit einem mit Bezug auf die Abtriebsachse (17) ansteigenden Radius (22) ausgebildet ist, welcher bei Drehung der Abtriebsachse (17) in Anlage an einen Schwenkarm (21) der Tankklappe (3) gelangend und gegen den Schwenkarm (21) drängend sowie dabei die Tankklappe (3) in die Anfangsausstellposition drängend ausgebildet ist.

6. Tankklappenmodul (2) nach Anspruch 4, **dadurch gekennzeichnet, dass** ab der Anfangsausstellposition bis zu der Offenstellung die Exzenterkontur (19) von dem Schwenkarm (21) der Tankklappe (3) beabstandet angeordnet ist.

7. Tankklappenmodul (2) nach Anspruch 4, **dadurch gekennzeichnet, dass** an der Abtriebsachse (17) ein Scheibenelement (23) angeformt ist und ein Seilmittel (24) vorgesehen ist, welches mit einem ersten Ende (25) an dem Scheibenelement (23) fixiert ist und von dem ein zweites Ende (26) an der Tankklappe (3) befestigt ist.

8. Tankklappenmodul (2) nach Anspruch 7, **dadurch gekennzeichnet, dass** das Seilmittel (24) mit der Tankklappe (3) derart verbunden ist, dass das Seilmittel (24) bei einer Bewegung der Tankklappe (3) aus der Anfangsausstellposition in die Offenstellung die Bewegung der Tankklappe (3) gegen die Ausstellkraft (9) des mechanischen Ausstellelements (8) führend ausgebildet ist.

9. Tankklappenmodul (2) nach Anspruch 7, **dadurch gekennzeichnet, dass** das Scheibenelement (23) eine zum Aufrollen und Abrollen des Seilmittels (24) ausgebildete Wickelkontur (27) aufweist.

10. Tankklappenmodul (2) nach Anspruch 9, **dadurch gekennzeichnet, dass** die Wickelkontur (27) mit wenigstens zwei unterschiedlichen, stetig ineinander übergehenden Radien (28, 29) oder exzentrisch ausgebildet ist.

## Claims

1. Fuel filler flap module (2) of a motor vehicle (1), comprising a support (4), a fuel filler flap (3) which is pivotably mounted on the support (4) and is designed to be movable tween a closed position and an open position, and a moving mechanism (6) designed for moving the fuel filler flap (3) out of the closed position into the open position and back into the closed position,
wherein the moving mechanism (6) has a mechanical deployment element (8) which is arranged on the support (4) and is designed to exert a deployment force (9) on the fuel filler flap (3) when the flap is in the open position, wherein
**characterized in that**
the moving mechanism (6) has a motor-driven deployment means (14) which is designed to push the fuel filler flap (3) with an auxiliary force (15) out of the closed position to an initial deployment position between the closed position and the open position, the auxiliary force (15) being greater than the deployment force (9).

2. Tank flap module (2) according to Claim 1, **characterized in that** the fuel filler flap (3) is mounted pivotably about a hinge pin (7) that is mounted on the carrier (4), wherein the initial deployment position is a position occupied when moving from the closed position towards the open position, in which the fuel filler flap (3) is arranged such that it is pivoted by 2° to 10° relative to its closed position about the hinge pin (7) in the direction of the open position.

3. Tank flap module (2) according to Claim 2, **characterized in that** the mechanical deployment element (8) is a torsion spring (10) wound around the hinge pin (7), of which a first spring arm (11) is braced against on the fuel filler flap (3) and of which a second spring arm (12) is braced against the support (4).

4. Tank flap module (2) according to Claim 2, **characterized in that** the motor-driven deployment means (14) has an output shaft (17) which is driven by an actuator (16) attached to the support (4) and which is mounted on the support (4) at a distance from the hinge pin (7), and on which an eccentric contour (19) is formed that interacts with the fuel filler flap (3) from the closed position to the initial deployment position when the deployment force (9) of the mechanical deployment element (8) does not push the fuel filler flap (3) out of the closed position into the initial deployment position.

5. Tank flap module (2) according to Claim 4, **characterized in that** the eccentric contour (19) is designed with a radius (22) that increases relative to the output shaft (17), and is designed such that, when the output shaft (17) rotates, contact is attained with a swivel arm (21) of the fuel filler flap (3), pushing against the swivel arm (21), and thereby also pushing the fuel filler flap (3) into the initial deployment position.

6. Tank flap module (2) according to Claim 4, **characterized in that** from the initial deployment position until the open position the eccentric contour (19) is not in contact with the swivel arm (21) of the fuel filler flap (3).

7. Tank flap module (2) according to Claim 4, **characterized in that** a disc element (23) is formed and a cable means (24) is provided on the output shaft (17), a first end (25) of which cable means is fixed on the disc element (23) and a second end (26) is fastened to the fuel filler flap (3).

8. Tank flap module (2) according to Claim 7, **characterized in that** the cable means (24) is connected to the fuel filler flap (3) in such manner that when the fuel filler flap (3) moves from the initial deployment position into the open position, the cable means (24) is designed to guide the movement of the fuel filler flap (3) against the deployment force (9) of the mechanical deployment element (8).

9. Tank flap module (2) according to Claim 7, **characterized in that** the disc element (23) has a winding contour (27) designed for rolling up and unrolling the cable means (24).

10. Tank flap module (2) according to Claim 9, **characterized in that** the winding contour (27) is designed with at least two different, continuously merging radii (28, 29) or eccentrically.

## Revendications

1. Module de trappe de réservoir de carburant (2) d'un véhicule automobile (1) comportant un support (4), une trappe de réservoir de carburant (3) logée pouvant pivoter sur le support (4), qui est constituée mobile entre une position de fermeture et une position d'ouverture et un mécanisme de déplacement (6) constitué pour déplacer la trappe de réservoir de carburant (3) de la position de fermeture à la position d'ouverture et en retour de la position de fermeture,
sachant que le mécanisme de déplacement (6) comporte un élément de déploiement mécanique (8) lequel est disposé sur le support (4) et lequel est constitué exerçant une force de déploiement (9) sur la trappe de réservoir de carburant (3) agissant dans la position d'ouverture,
**caractérisé en ce que**
le mécanisme de déplacement (6) comporte un moyen de déploiement à entraînement motorisé (14), lequel est constitué repoussant avec une force auxiliaire (15) la trappe de réservoir de carburant (3) de la position de fermeture jusqu'à une position de déploiement initiale, qui se situe entre la position de fermeture et la position d'ouverture, sachant que la force auxiliaire (15) est supérieure à la force de déploiement (9).

2. Module de trappe de réservoir de carburant (2) selon la revendication 1, **caractérisé en ce que** la trappe de réservoir de carburant (3) est logée pouvant pivoter autour d'un axe de pivotement (7) logé sur le support (4), sachant que la position de déploiement initiale est une position déplacée de la position de fermeture en direction de la position d'ouverture dans laquelle la trappe de réservoir de carburant (3) est disposée par rapport à la position de fermeture pivotée de 2° à 10° autour de l'axe de pivotement (7) dans la direction de la position d'ouverture.

3. Module de trappe de réservoir de carburant (2) selon la revendication 2, **caractérisé en ce que** l'élément de déploiement mécanique (8) est un ressort de torsion (10) enroulé autour de l'axe de pivotement (7) duquel un premier bras de ressort (11) s'appuie sur la trappe de réservoir de carburant (3) et duquel un deuxième bras de ressort (12) s'appuie sur le support (4).

4. Module de trappe de réservoir de carburant (2) selon la revendication 2, **caractérisé en ce que** le moyen de déploiement motorisé (14) comporte un axe mené (17) entraîné par un actionneur (16) placé sur le support (4), lequel est logé sur le support (4) à distance de l'axe de pivotement (7) et sur lequel est conformé un contour excentrique (19), qui coopère avec la trappe de réservoir de carburant (3) de la position de fermeture à la position de déploiement initiale, lorsque la force de déploiement (9) de l'élément de déploiement mécanique (8) ne repousse pas la trappe de réservoir de carburant (3) de la position de fermeture jusqu'à la position de déploiement initiale.

5. Module de trappe de réservoir de carburant (2) selon la revendication 4, **caractérisé en ce que** le contour excentrique (19) est constitué avec un rayon (22) croissant par rapport à l'axe mené (17), lequel est constitué parvenant, lors de la rotation de l'axe mené (17), en appui sur un bras de pivotement (21) de la trappe de réservoir de carburant (3) et repoussant contre le bras de pivotement (21) ainsi que repoussant à cet effet la trappe de réservoir de carburant (3) dans la position de déploiement initiale.

6. Module de trappe de réservoir de carburant (2) selon la revendication 4, **caractérisé en ce que** le contour excentrique (19) est disposé à distance du bras de pivotement (21) de la trappe de réservoir de carburant (3) depuis la position de déploiement initiale jusqu'à la position d'ouverture.

7. Module de trappe de réservoir de carburant (2) selon la revendication 4, **caractérisé en ce qu'**un élément en forme de disque (23) est conformé sur l'axe mené (17) et un moyen à câble (24) est prévu, lequel est fixé avec une première extrémité (25) à l'élément en forme de disque (23) et duquel une deuxième extrémité (26) est fixée à la trappe de réservoir de carburant (3).

8. Module de trappe de réservoir de carburant (2) selon la revendication 7, **caractérisé en ce que** le moyen à câble (24) est relié à la trappe de réservoir de carburant (3) de telle manière que le moyen à câble (24) lors d'un mouvement de la trappe de réservoir de carburant (3) de la position de déploiement initiale à la position d'ouverture, est constitué guidant le mouvement de la trappe de réservoir de carburant (3) en opposition à la force de déploiement (9) de l'élément de déploiement mécanique (8).

9. Module de trappe de réservoir de carburant (2) selon la revendication 7, **caractérisé en ce que** l'élément en forme de disque (23) comporte un contour d'enroulement (27) constitué pour l'enroulement et le déroulement du moyen à câble (24).

10. Module de trappe de réservoir de carburant (2) selon la revendication 9, **caractérisé en ce que** le contour d'enroulement (27) est constitué avec au moins deux rayons (28, 29) différents, l'un passant dans l'autre en permanence, ou de façon excentrique.
